(19) **Europäisches Patentamt** / **European Patent Office** / **Office européen des brevets**

(11) **EP 2 235 989 B1**

(12) **EUROPEAN PATENT SPECIFICATION**

(45) Date of publication and mention
of the grant of the patent:
**07.12.2011 Bulletin 2011/49**

(51) Int Cl.:
**H04W 56/00** $^{(2009.01)}$

(21) Application number: **08866299.4**

(22) Date of filing: **20.12.2008**

(86) International application number:
**PCT/US2008/087867**

(87) International publication number:
**WO 2009/086222 (09.07.2009 Gazette 2009/28)**

(54) **UMB CELL SITE MODEM ARCHITECTURE AND METHODS**

MODEMARCHITEKTUR FÜR UMB-ZELLENSTANDORT UND VERFAHREN

PROCÉDÉS ET ARCHITECTURE DE MODEM DE SITE DE CELLULES UMB

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **20.12.2007 US 15642 P
19.12.2008 US 340441**

(43) Date of publication of application:
**06.10.2010 Bulletin 2010/40**

(73) Proprietor: **QUALCOMM Incorporated
San Diego, CA 92121 (US)**

(72) Inventor: **UPPALA, Sathyadev
San Diego
California 92121-1714 (US)**

(74) Representative: **Wagner, Karl H.
Wagner & Geyer
Gewürzmühlstrasse 5
80538 Munich (DE)**

(56) References cited:
**EP-A- 1 775 976      GB-A- 2 321 151
US-A1- 2003 179 779      US-B1- 6 449 485**

**Description**

<u>FIELD</u>

This disclosure relates generally to cell site modems. More particularly, the disclosure relates to timing alignment and RF control using a cell site modem.

<u>BACKGROUND</u>

Wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, 3GPP LTE systems, and orthogonal frequency division multiple access (OFDMA) systems.

Generally, a wireless multiple-access communication system can simultaneously support communication for multiple wireless terminals. Each terminal communicates with one or more base stations via transmissions on the forward and reverse (a.k.a. return or uplink) links. The forward link (or downlink) refers to the communication link from the base stations to the terminals, and the reverse link (a.k.a. return link or uplink) refers to the communication link from the terminals to the base stations. This communication link may be established via a single-in-single-out, multiple-in-signal-out or a multiple-in-multiple-out (MIMO) system.

A MIMO system employs multiple ($N_T$) transmit antennas and multiple ($N_R$) receive antennas for data transmission. A MIMO channel formed by the $N_T$ transmit and $N_R$ receive antennas may be decomposed into $N_S$ independent channels, which are also referred to as spatial channels, where $N_S \leq \min \{N_T, N_R\}$. Each of the $N_S$ independent channels corresponds to a dimension. The MIMO system can provide improved performance (e.g., higher throughput and/or greater reliability) if the additional dimensionalities created by the multiple transmit and receive antennas are utilized. For example, a MIMO system can support time division duplex (TDD) and frequency division duplex (FDD) systems. In a TDD system, the forward and reverse link transmissions are on the same frequency region so that the reciprocity principle allows the estimation of the forward link channel from the reverse link channel. This enables the access point to extract transmit beamforming gain on the forward link when multiple antennas are available at the access point.

Today's broadband wireless systems require efficient and powerful hardware, for example, application specific integrated circuits (ASIC), to support high rate data communications and also require highly flexible apparatus to support varied control channels. Data channels usually employ standard modulation techniques, such as quadrature phase shift keying (QPSK), quadrature amplitude modulation (QAM) etc. However the control channels, including different pilot channels, require special treatment. Control channels are low throughput in nature but require high reliability. As a result, control channels often use special modulation schemes, irregular and varied tones/orthogonal frequency division multiplex (OFDM) symbols resource allocation, channel specific hopping, and the reuse of tone resources among different channels. Moreover, as part of wireless standard evolution, the control channels are often modified over time. Also the control channel formats between different standards, such as Ultra Mobile Broadband (UMB) and Long Term Evolution (LTE), are very different and flexibility in a system to adapt to one or the other is needed for versatility.

<u>SUMMARY</u>

Disclosed is an apparatus and method for timing alignment and/or RF control. According to one aspect, a method for sample synchronization comprises receiving a return link (RL) timestamp from a radio frequency front end (RFFE); receiving a system time second from a navigation and timing system; generating a forward link (FL) timestamp based on the RL timestamp and the system time second; and including the FL timestamp and the system time second in a time data.

According to another aspect, a method for RF control comprises storing gain information and gating control information in a memory; and performing one or more of the following: sending a first desired timestamp and the gain information to a radio frequency front end (RFFE); sending a second desired timestamp and a txEnable command to a transmit gating control; or sending a third desired timestamp and a rxEnable command to a receive gating control.

According to another aspect, a cell site modem (CSM) for sample synchronization comprising a processor and circuitry configured to: receive a return link (RL) timestamp from a radio frequency front end (RFFE); receive a system time second from a navigation and timing system; generate a forward link (FL) timestamp based on the RL timestamp and the system time second; and include the FL timestamp and the system time second in a time data.

According to another aspect, a cell site modem (CSM) for RF control comprising a processor and circuitry configured to: store gain information and gating control information in a memory; and perform one or more of the following:

send a first desired timestamp and the gain information to a radio frequency front end (RFFE); send a second desired timestamp and a txEnable command to a transmit gating control; or send a third desired timestamp and a rxEnable command to a receive gating control.

According to another aspect, a device for sample synchronization comprises means for receiving a return link (RL) timestamp from a radio frequency front end (RFFE); means for receiving a system time second from a navigation and timing system; means for generating a forward link (FL) timestamp based on the RL timestamp and the system time second; and means for including the FL timestamp and the system time second in a time data.

According to another aspect, a device for RF control comprises means for storing gain information and gating control information in a memory; and means for performing one or more of the following: sending a first desired timestamp and the gain information to a radio frequency front end (RFFE); sending a second desired timestamp and a txEnable command to a transmit gating control; or sending a third desired timestamp and a rxEnable command to a receive gating control.

According to another aspect, a computer-readable medium including program code stored thereon, comprising program code for receiving a return link (RL) timestamp from a radio frequency front end (RFFE); program code for receiving a system time second from a navigation and timing system; program code for generating a forward link (FL) timestamp based on the RL timestamp and the system time second; and program code for including the FL timestamp and the system time second in a time data.

According to another aspect, a computer-readable medium including program code stored thereon, comprising program code for storing gain information and gating control information in a memory; and program code for performing one or more of the following: sending a first desired timestamp and the gain information to a radio frequency front end (RFFE); sending a second desired timestamp and a txEnable command to a transmit gating control; or sending a third desired timestamp and a rxEnable command to a receive gating control.

Advantages of the present disclosure include the ability to align timing references between the forward link and reverse link (a.k.a. return link) using a common serial interface and the ability to provide RF control functions using a same common serial interface.

It is understood that other aspects will become readily apparent to those skilled in the art from the following detailed description, wherein it is shown and described various aspects by way of illustration. The drawings and detailed description are to be regarded as illustrative in nature and not as restrictive.

See GB-A-2321151 (Lucent Technologies).

BRIEF DESCRIPTION OF THE DRAWINGS

Figure 1 is a block diagram illustrating an example of a multiple access wireless communication system.

Figure 2 is a block diagram illustrating an example of a wireless MIMO communication system.

Figure 3 illustrates an example of a logical architecture of a cell site modem (CSM) with several interfaces.

Figure 4 illustrates an example of one management host used for all CSMs.

Figure 5 illustrates an example of a Phase 1 Ultra Mobile Broadband (UMB) access point (AP) reference design architecture.

Figure 6 illustrates an example of a Phase 2 UMB AP reference design architecture.

Figure 7 illustrates examples of key elements involved in processing data channel MAC packets on the forward link (FL) and return link (RL).

Figure 8 illustrates an example of a CSM message header.

Figure 9 illustrates an example of the traffic channel assignments message flow.

Figure 10 illustrates an example of the forward link (FL) data flow and crypto mask generation.

Figure 11 illustrates an example of the return link (RL) data flow and decryption.

Figure 12 illustrates an example block diagram of an access point.

Figure 13 illustrates an example representation of FL and RL sample interfaces.

Figure 14 illustrates an example flow diagram for sample synchronization.

Figure 15 illustrates an example of a device suitable for sample synchronization.

Figure 16 illustrates an example flow diagram for RF control.

Figure 17 illustrates an example of a device suitable for RF control.

Figure 18 illustrates an example of a device comprising a processor in communication with a memory for sample synchronization and/or RF control.

DETAILED DESCRIPTION

The detailed description set forth below in connection with the appended drawings is intended as a description of various aspects of the present disclosure and is not intended to represent the only aspects in which the present disclosure may be practiced. Each aspect described in this disclosure is provided merely as an example or illustration of the present disclosure, and should not necessarily be construed as preferred or advantageous over other aspects. The detailed description includes specific details for the purpose of providing a thorough understanding of the present disclosure. However, it will be apparent to those skilled in the art that the present disclosure may be practiced without these specific details. In some instances, well-known structures and devices are shown in block diagram form in order to avoid obscuring the concepts of the present disclosure. Acronyms and other descriptive terminology may be used merely for convenience and clarity and are not intended to limit the scope of the disclosure.

While for purposes of simplicity of explanation, the methodologies are shown and described as a series of acts, it is to be understood and appreciated that the methodologies are not limited by the order of acts, as some acts may, in accordance with one or more aspects, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with one or more aspects.

The techniques described herein may be used for various wireless communication systems such as Code Division Multiple Access (CDMA) systems, Time Division Multiple Access (TDMA) systems, Frequency Division Multiple Access (FDMA) systems, Orthogonal FDMA (OFDMA) systems, Single-Carrier FDMA (SC-FDMA) systems, etc. The terms "systems" and "networks" are often used interchangeably. A CDMA system may implement a radio technology such as Universal Terrestrial Radio Access (UTRA), cdma2000, etc. UTRA includes Wideband-CDMA (W-CDMA) and Low Chip Rate (LCR). Cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), IEEE 802.11, IEEE 802.16, IEEE 802.20, Flash-OFDM®, etc. UTRA, E-UTRA, and GSM are part of Universal Mobile Telecommunication System (UMTS). Long Term Evolution (LTE) is an upcoming release of UMTS that uses E-UTRA. UTRA, E-UTRA, GSM, UMTS and LTE are described in documents from an organization named "3rd Generation Partnership Project" (3GPP). Cdma2000 is described in documents from an organization named "3rd Generation Partnership Project 2" (3GPP2). These various radio technologies and standards are known in the art.

Additionally, single carrier frequency division multiple access (SC-FDMA), which utilizes single carrier modulation and frequency domain equalization is another wireless communication technique. A SC-FDMA system can have similar performance and the same overall complexity as those of an OFDMA system. SC-FDMA signal has lower peak-to-average power ratio (PAPR) because of its inherent single carrier structure. SC-FDMA has drawn great attention, especially in uplink communications where lower PAPR greatly benefits the mobile terminal in terms of transmit power efficiency. Using SC-FDMA technique is currently a working assumption for uplink multiple access scheme in 3GPP Long Term Evolution (LTE), or Evolved UTRA. All of the above wireless communication techniques and standards may be used with the data centric multiplexing algorithms described herein.

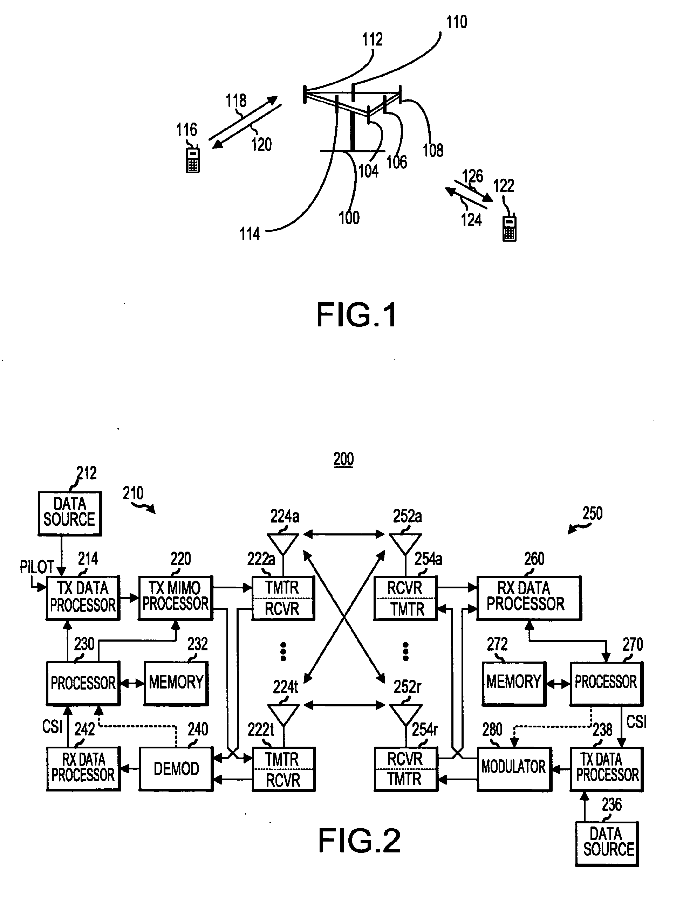

Figure 1 is a block diagram illustrating an example of a multiple access wireless communication system. As illustrated in Figure 1, an access point 100 (AP) includes multiple antenna groups, one including 104 and 106, another including 108 and 110, and an additional including 112 and 114. In Figure 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal 122 is in communication with antennas 106 and 108, where antennas 106 and 108 transmit information to access terminal 122 over forward link 126 and receive information from access terminal 122 over reverse link 124. In a FDD system, communication links 118, 120, 124 and 126 may use different frequency for communication. For example, forward link 120 may use a different frequency then that used by reverse link 118. Each group of antennas and/or the area in which they are designed to communicate is often referred to as a sector of the access point. In one example, antenna groups each are designed to communicate to access terminals in a sector, of the areas covered by access point 100.

In communication over forward links 120 and 126, the transmitting antennas of access point 100 utilize beamforming in order to improve the signal-to-noise ratio of forward links for the different access terminals 116 and 124. Also, an access point using beamforming to transmit to access terminals scattered randomly through its coverage causes less interference to access terminals in neighboring cells than an access point transmitting through a single antenna to all its access terminals. An access point may be a fixed station. An access point may also be referred to as an access node, a base station or some other similar terminology known in the art. An access terminal may also be called a mobile station, a user equipment (UE), a wireless communication device or some other similar terminology known in the art.

Figure 2 is a block diagram illustrating an example of a wireless MIMO communication system. Figure 2 shows a access point 210 and a access terminal 250 in a MIMO system 200. At the access point 210, traffic data for a number of data streams is provided from a data source 212 to a transmit (TX) data processor 214. In one example, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In one example, the TX MIMO processor 220 applies beamforming weights to the symbols of the data streams and to the antenna from which the symbol is being transmitted. Each transmitter 222a through 222t receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At access terminal 250, the transmitted modulated signals are received by $N_R$ antennas 252a through 252r and the received signal from each antenna 252a through 252r is provided to a respective receiver (RCVR) 254a through 254r. Each receiver 254a through 254r conditions (e.g., filters, amplifies, and downconverts) a respective received signal, digitizes the conditioned signal to provide samples, and further processes the samples to provide a corresponding "received" symbol stream.

A RX data processor 260 then receives and processes the $N_R$ received symbol streams from $N_R$ receivers 254a through 254r based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at access point 210. A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to access point 210.

At access point 210, the modulated signals from access terminal 250 are received by antennas 224a through 224t, conditioned by receivers 222a through 222t, demodulated by a demodulator 240, and processed by a RX data processor 242 to extract the reserve link message transmitted by the access terminal 250. Processor 230 then determines which pre-coding matrix to use for determining the beamforming weights, then the processor 230 processes the extracted message. One skilled in the art would understand that the transceivers 222a through 222t are called transmitters in the forward link and receivers in the reverse link. Similarly, one skilled in the art would understand that the transceivers 254a through 254r are called receivers in the forward link and transmitters in the reverse link.

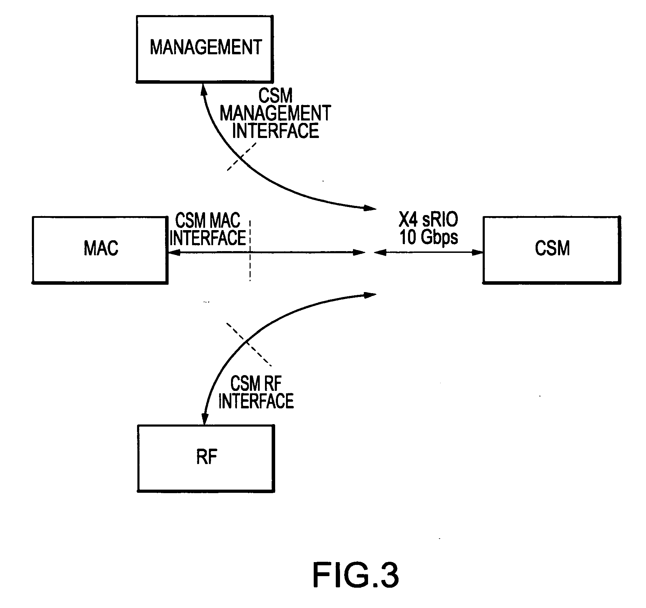

In one aspect, a cell site modem (CSM) implements the modulation and demodulation functions of the access point 210. In particular, the modulator of the TX data processor 214 and the demodulator 240 of the access point 210 may be implemented in an integrated CSM. Figure 3 illustrates an example of a logical architecture of a cell site modem (CSM) with several interfaces. All information flowing into and out of the CSM is conveyed across a Serial RapidIO (sRIO) interface. For example, the sRIO interface is used to communicate with the RF sections of the transmitter and receiver, the Media Access Control (MAC) functions in the TX data processor 214 and RX data processor 242, and the management plane software in the processor 230. The MAC functions are used for regulating multiple users in a common transmission link. Information is exchanged over the sRIO interface through direct memory writes, sRIO messages and doorbells. In one aspect, a doorbell is a short 8 bit or 16 bit message. In one example, the MAC and management hosts are logical entities and may be collocated on the same hardware element. In one example, the management interface provides mechanisms for CSM bootup and provisioning, self test, heartbeats, debug and diagnostic logging, statistics retrieval etc. Debug logging refers to operational logging of events that occur within the running system. These are reported through messages and include protocol and error events. Diagnostic logging is used to diagnose or monitor performance characteristics of the system.

The MAC interface is used to exchange MAC and PHY information between the CSM and the MAC host. On the Forward Link (FL), the MAC interface allows the MAC host to indicate to the CSM the information bits to be sent over the airlink, for example, for one or more of the following channels:

- F-SCCH (Forward Shared Control Channel)
- F-ACKCH (Forward Acknowledgement Channel)
- F-SPCH (Forward Start of Packet Channel)

- F-PQICH (Forward Pilot Quality Indicator Channel)
- F-FOSICH (Forward Fast Other Sector Interference Channel)
- F-IOTCH (Forward Interference Over Thermal Channel)
- F-RABCH (Forward Reverse Activity Bit Channel)
- F-DCH (Forward Data Channel)
- F-PBCCH (Forward Primary Broadcast Control Channel)
- F-SBCCH (Forward Secondary Broadcast Control Channel)

On the Reverse Link (RL), the CSM provides the MAC host the bits received over the airlink, for example, for one or more of the following channels:

- R-ODCCH (Reverse OFDMA Dedicated Control Channel)
- R-CQICH (Reverse Channel Quality Indicator Channel)
- R-REQCH (Reverse Request Channel)
- R-MQICH (Reverse MIMO Quality Indicator Channel)
- R-SFCH (Reverse Subband Feedback Channel)
- R-BFCH (Reverse Beam Feedback Channel)
- R-CDCCH (Reverse CDMA Dedicated Control Channel)
- R-CQICH (Reverse Channel Quality Indicator Channel)
- R-REQCH (Reverse Request Channel)
- R-PAHCH (Reverse Power Amplifier Headroom Channel)
- R-PSDCH (Reverse Power Spectral Density Channel)
- R-DCH (Reverse Data Channel)

In addition to bits sent over the channels, the MAC host uses the messaging interface to control the behavior of various algorithms in the CSM for power control, timing control, and multiple antenna techniques. The details of how this information is carried are described in the section on the RF control interface below.

The CSM radio frequency (RF) interface provides a protocol for carrying time-domain inphase-quadrature (IQ) baseband samples and control messages between the CSM and RF front end. This protocol also provides for synchronization of the CSM with the network timing reference.

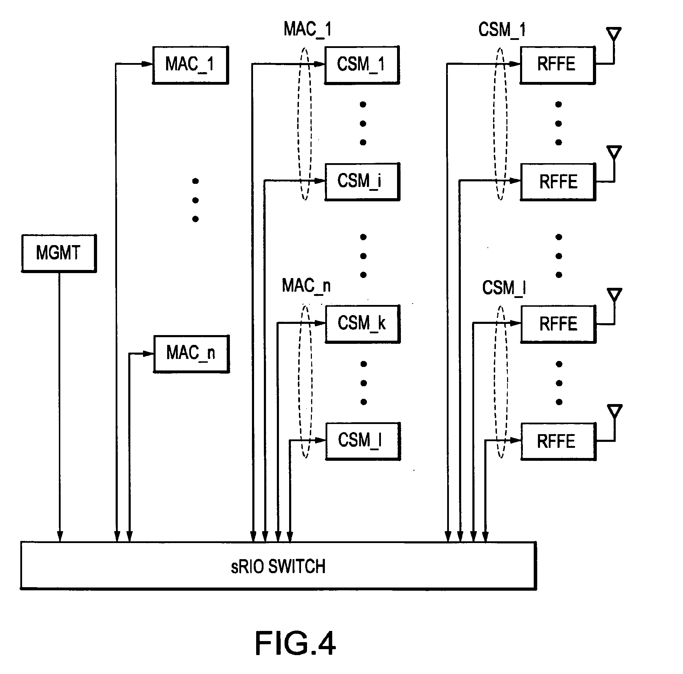

In one aspect, the access point may consist of multiple transmit/receive antennas, CSMs, MAC hosts, and management hosts. In one example, the CSM may support up to four transmit and four receive antennas. The CSM needs to be provisioned with the subset of antennas with which it should associate. A single MAC host can interface with multiple CSMs to allow support for multiple sector carriers on a particular MAC channel. The CSM is provisioned with the associated MAC and management host. Figure 4 illustrates an example of one management host used for all CSMs.

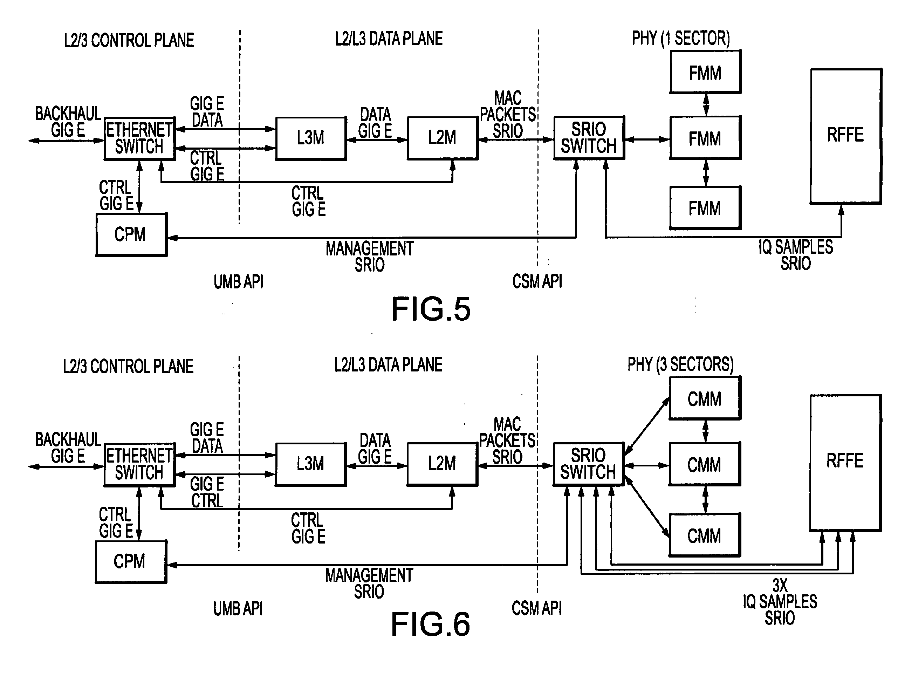

In one example, the access point reference design architecture incorporates a CSM. In the reference design, the Layer 2 Module (L2M) is the MAC host and the control plane module (CPM) is the management host. Figure 5 illustrates an example of a Phase 1 Ultra Mobile Broadband (UMB) access point (AP) reference design architecture. In this example, CSM refers to three Field Gate Programmable Array (FPGA) Modem Modules (FMMs) that together implement the Phase 1 CSM functionality.

Figure 6 illustrates an example of a Phase 2 UMB AP reference design architecture. The cellular modem module (CMM) now incorporates the CSM and the reference design supports three sectors. In one aspect, the CSM implements, for example, one or more of the following functionalities:

- Forward link (FL) processing from encoding MAC channels to generation of baseband IQ samples.
- Return (a.k.a. reverse) link (RL) processing from baseband IQ samples to decoding the MAC channels.
- Power control loop- target can be adjusted by the MAC host.
- Estimation of the RL timing correction for each access terminal (AT).
- Hybrid ARQ (H-ARQ-automatic repeat request) is terminated within the CSM.
- Multiple antenna techniques (MIMO- multiple input multiple output, SDMA- spatial division multiple access, and QORL- quasi orthogonal reverse link) are implemented in the CSM but are controlled by the MAC host.
- Debugging and diagnostic logging
- CSM provisioning is managed through get/set commands in the CSM API (application programming interface).

The MAC host software is responsible, for example, for one or more of the following functionalities:

- FL active queue management

- Signature/authentication of Signaling Protocol packets
- Inter-Route Tunneling protocol
- Radio Link Protocol (RLP)- segmentation and assembly
- Stream and Route Protocols
- Packet Consolidation Protocol
- Encryption/decryption support
- FL and RL data channel MAC
- Overhead messages
- R-CDCCH (Reverse CDMA Dedicated Control Channel) and R-ODCCH (Reverse OFDMA Dedicated Control Channel) message processing
- RL timing control loops using CSM provided timing correction
- FL and RL link adaptation
- FL and RL scheduler
- Page scheduling
- Connection control plane
- Signaling Protocol
- Debug and diagnostic logging

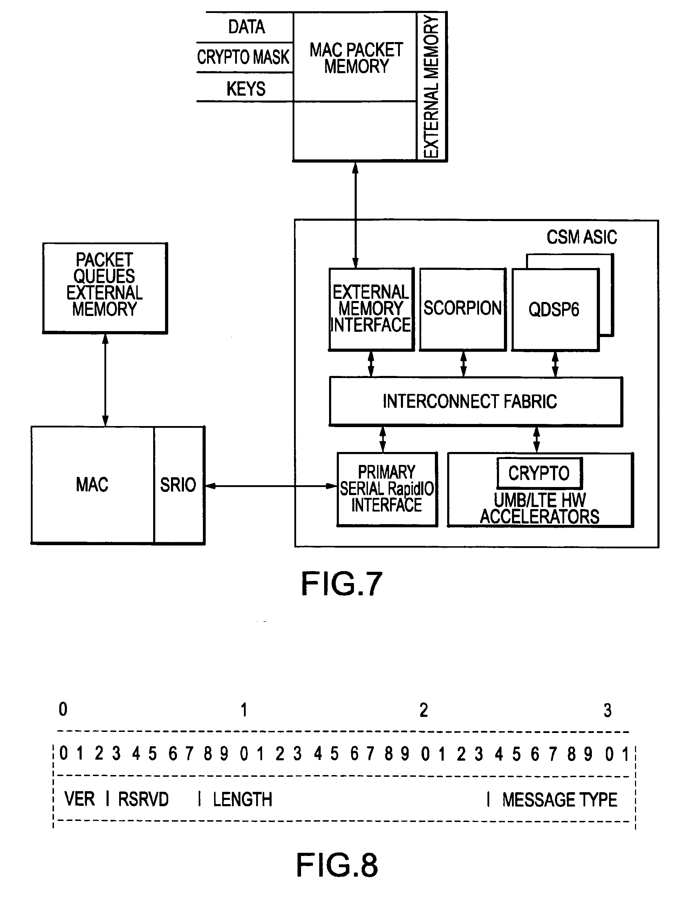

In one example, encryption and decryption are done by a hardware accelerator in the CSM. The engine is controlled by the MAC host over the sRIO interface. Figure 7 illustrates examples of key elements involved in processing data channel MAC packets on the forward link (FL) and return (a.k.a. reverse) link (RL). The MAC host stores the FL higher layer data received packets in queues in external memory on a per flow basis. Based on an FL scheduling algorithm, the MAC host copies selected packets from a subset of flows into the CSM packet memory over the sRIO interface. The MAC host also instructs the encryption engine to construct encryption mask bits for the packets in the CSM packet memory and store these mask bits in the CSM packet memory. The MAC host scheduler determines which part of these packets need to be sent out over the air interface in the form of MAC packets in a particular physical layer frame and sends a message to the CSM instructing it how to construct these MAC packets. The CSM pulls in the corresponding bytes of the packets and performs an exclusive OR operation with the encryption mask bits and creates the MAC packet that is then processed by the rest of the CSM transmitter chain.

On receiving a MAC packet on the RL data channel, the CSM processes the MAC packet and forwards all the PCP (packet consolidation protocol), route, stream, and RLP headers in the MAC packet to the MAC host. Based on the headers, the MAC host instructs the encryption engine to decrypt each SAR (segmentation and reassembly) payload in the MAC packet and write the results into the appropriate MAC host memory location. The RLP processing in the MAC host reassembles packets from the SAR segments.

In one example, the CSM API (application programming interface) consists of the protocols and associated messages between the CSM and the MAC and management hosts flowing over the sRIO interface. Information is exchanged over the sRIO interface through direct memory reads and writes, sRIO messages, and doorbells. For example, for direct memory access, standard RapidIO input/output transactions NREAD, WRITE, NWRITE, and NWRITE_R are used. Figure 8 illustrates an example of a CSM message header. The messages that flow over the CSM API have the CSM message header as shown in Figure 8. Table 1 describes examples of the fields in the CSM message header.

Table 1

| Field | Length (bits) | Description |
|---|---|---|
| Ver | 3 | Current version of the header |
| Rsrved | 5 | Unused; mast be set to 0 by the sender and ignored by the receiver |
| Length | 16 | Length of the message, in octets, inducing header |
| Message Typo | 8 | Message type being carried within the payload; used to distinguish between the various management and MAC interface messages |

In one aspect, the CSM incorporates a management interface with, for example, one or more of the following features:

- Bootup

- Built-in test

- Heartbeat- message carries a system timestamp and the sRIO device ID that identifies the management host where messages, such as logs, should be sent by the CSM. Lack of a heartbeat response from the CSM may be used to detect a failure of the CSM and the need to initiate recovery procedures.

- Provisioning- contains various provisioning parameters to configure the operation of the CSM, e.g. the sRIO device IDs of the RF front end and the MAC host processor, the number of transmit/receive antennas available, etc.
- Statistics
- Logging- debug and diagnostic

In one aspect the CSM incorporates a MAC interface with, for example, one or more of the following features:

- Preamble data- sent on the start of the super frame
- FLCS descriptor- forward link control segment descriptor
- FL DCH assignment and MAC packet descriptor
- Crypto mask generation- for encryption of FL data
- Decrypt request- to decrypt RL data
- FL Ack and RL assignment request
- RL Ack and FL assignment request
- R-DCH MAC header
- R-DCH assignment
- R-CDCCH- RL CDMA control channel MAC messages and timing information
- R-ODCCH- RL OFDMA control channel MAC messaging
- AT management- Add and delete mobiles from the CSM

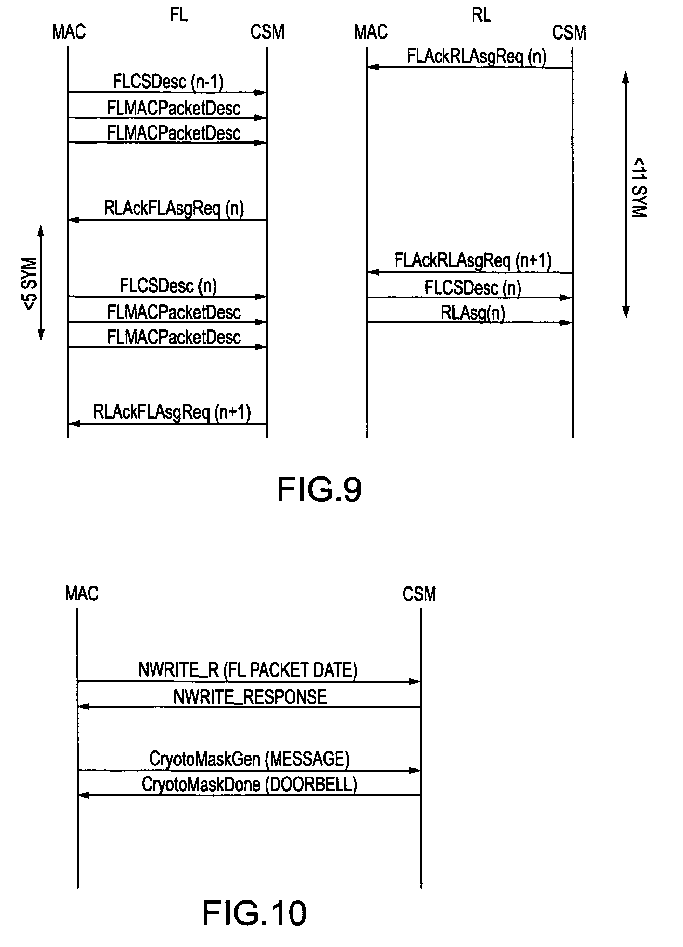

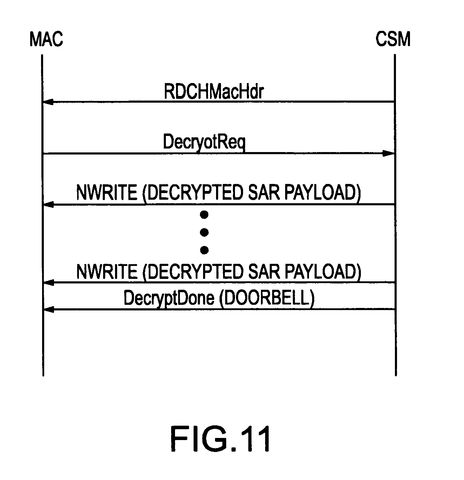

Figure 9 illustrates an example of the traffic channel assignments message flow. Figure 10 illustrates an example of the forward link (FL) data flow and crypto mask generation. And, Figure 11 illustrates an example of the return (a.k.a. reverse) link (RL) data flow and decryption.

In one aspect, the CSM sample interface provides a protocol for carrying time domain IQ baseband samples between the CSM and a radio frequency front end (RFFE). This protocol also provides for synchronization of the CSM with the network timing reference as well as robust error/loss detection. Global synchronization of the system is maintained by the RFFE via the Global Positioning Satellite (GPS) or some other mechanism, or the system may operate in asynchronous mode with system time being local to a single base station. For UMB synchronous operation, the airlink framing structure is universally aligned and referenced back to the start of GPS time, for example. The RFFE must provide a system time reference to the CSM so that the CSM may generate an underlying framing structure with the correct synchronization. This system time reference is a count of samples since the last system time second. The sample count timestamp represents the absolute time of the sample immediately following the timestamp referenced at the antenna.

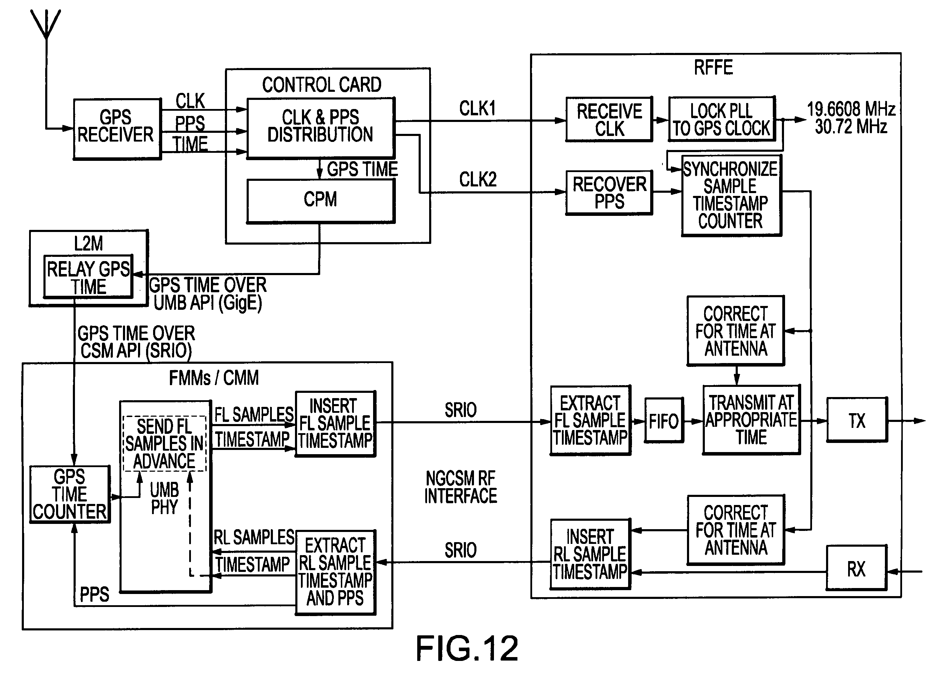

Figure 12 illustrates an example block diagram of an access point. The GPS receiver inputs GPS time to a control card which generates a Chipx16 clock and a one-second pulse to the RFFE. The RFFE uses these clocks to synchronize sample timestamps to send over the sRIO interface to the CSM. In one example, for USB, the framing structure has different repetition rates and aligns with seconds on different scales, depending on the underlying physical layer (PHY) structure (cyclic prefix (CP) size and guard times in time division duplex (TDD)). Therefore, the alignment of the framing structure to seconds ranges in periods, for example, from 7 seconds to 2219 seconds. To relieve the RFFE from the need to understand the specifics of the PHY parameters or GPS time, the RFFE need only provide a counter of the number of samples since the last system time second pulse. The current GPS or system time second is provided to the CSM through another mechanism, such as messaging from a controller, which is defined by the CSM application programming interface (API). With the information of the current system time second and the sample count within the system time second, the CSM can completely derive the framing synchronization for the system.

To maintain error robustness, the sample counter timestamp is multiplexed with the sample stream to and from the RFFE at fixed intervals. For example, the sample segment size between timestamps is 1024 samples for the 10-MHz bandwidth UMB frequency division duplex (FDD) mode and 512 samples for the 5-MHz bandwidth UMB FDD mode. In one aspect the CSM and the RFFE pass the sample information for the forward and reverse links using a Serial RapidIO (sRIO) interface. The RFFE sends the reverse link (RL) data to the CSM via sRIO SWRITEs initiated by the RFFE. The CSM sends forward link (FL) data to the RFFE via sRIO SWRITEs initiated by the CSM. In one example, the sRIO interface has the following minimum performance requirements:

- 64-bit data words used across the interface.
- At least two maximal-length sRIO transactions (256 bytes) per antenna back-to-back at maximum line rate (10 Gbps) is accepted.

- The writing device does not write more than three maximal-length sRIO transactions to the same address port in less than the average time represented by two maximal-length sRIO transactions.
- All sRIO transactions are delivered in order.
- The sRIO transactions from the RFFE are generated at a constant average rate with constant average latency plus jitter.
- The maximum end-to-end jitter introduced on any sRIO transaction is less than $\pm 64$/Sample_rate. The FL transactions are derived from the RL transactions and may reproduce jitter on the RL transactions, so jitter tolerance is double for FL transactions. For example, for the 10-MHz bandwidth UMB FDD mode, jitter tolerances are:

  ■ < $\pm 6.50$ $\mu$sec for RL data and timestamp SWRITES.
  ■ < $\pm 13.0$ $\mu$sec for FL data and timestamp SWRITES.
  ■ IQ data is written using all maximal length (256 bytes) transactions to maximize sRIO performance.

In one aspect, latency in both the FL and RL paths between the CSM and the antennas is quantified. This information is required to adjust the RL timestamp sent to the CSM. This adjustment allows the CSM to synchronously align the FL data. Meaningful FL data cannot be delivered before this synchronization has been established.

The timestamp values represent the time of a sample at the antenna. The RFFE must account for any latency between the antenna and its digital sampling by offsetting the timestamps appropriately. The CSM supports a programmable advance of the FL timestamp to account for transport latency, maximum jitter bounds, and latency within the RFFE. In one example, this advance is less than 200 $\mu$sec.

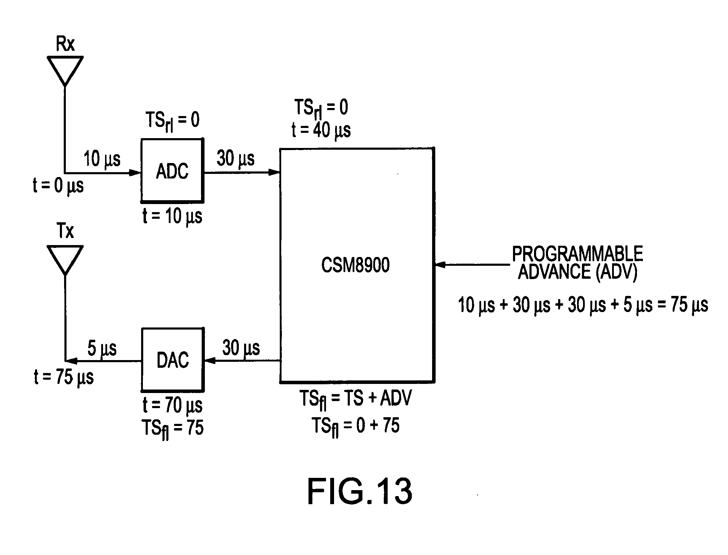

Figure 13 illustrates an example representation of FL and RL sample interfaces. Although the FL and RL both communicate to the CSM by one sRIO interface, they are shown separated in Figure 13 for simplicity. The example in Figure 13 illustrates a total system delay from the receive antenna through the analog-digital converter (ADC) to the CSM, and the CSM through the digital-analog converter (DAC) to the transmit antenna equaling 75 microseconds. In this example, the 75 $\mu$sec represents the total latency between the CSM and antennas on the FL and RL which is used to program the advance timing for the FL data to synchronize it to the system time second.

In one aspect, when the CSM receives a timestamp from the RL, it adds the advance timing programmed for the timestamps on the FL. This allows the correct synchronization of the FL samples at the transmit antenna.

In one aspect, the sample stream format has, for example, one or more of the following features:

- The timestamp counter is aligned to system time seconds, so that the 0 count is transmitted as one of the timestamp values.
- The stream includes a timestamp that indicates the system time of the immediately following sample. The timestamps are expected at a constant frequency; therefore, the number of samples between timestamps is a function of the sample rate. For example, the timestamp is written every 1024 samples for the 10 MHz bandwidth UMB FDD mode.
- For synchronous system operation, the system time is GPS time and aligned to the GPS second.
- The timestamp includes the current mode of operation represented by stream of data. This is a static configuration for consistency checking only. Error/loss detection will be implemented based on the count of samples between timestamps and timing measurements between the timestamps.

In one aspect, Table 2 illustrates the sample count timestamp format. Table 3 illustrates the sample data format for the RL. Table 4 illustrates the sample data format for the FL. And, Table 5 illustrates the register addressing.

Table 2

| Sample count [63 downto 32] | Count of samples since the previous second. This counter courts up from 0 at the first sample of the second. |
|---|---|
| TS_valid [31] | Set to 1 for valid timestamps based on locked timing references, 0 for invalid timestamp, or unlocked operation |
| TDD_mode [30] | Set to 1 forTDD oparation, 0 for FDO operation |
| Ant_num [29 downto 28] | Physical antenna number: 0 to 3 |
| Carrier [27 downto 24] | 4-bit identifier for the carrier |

(continued)

| Sample count [63 downto 32] | Count of samples since the previous second. This counter courts up from 0 at the first sample of the second. |
|---|---|
| Sample_rate [23 downto 20] | Stream sample rate:<br>    b0000: 19.6608 MHz (20 MHz UMB)<br>    b0001: 9.8304 MHz (10 MHz UMB)<br>    b0010: 4.9152 Mhz.(up to 5 MHz UMB)<br>    b0011 - 1111: reserved |
| Reserved [19 downto 0] | Reserved |

Table 3

| I_sample_N [63 downto 48] | Nth 16-bit RL sample, I value |
|---|---|
| Q_sample_N [47 downto 32] | Nth 16-bit RL sample, Q value |
| I_sample_N+1 [31 downto 16] | Nth+1 16-bit RL sample, I value |
| Qsample_N+1 [15 downto 0] | Nth+1 16-bit RL sample, Q value |

Table 4

| I sample_N [63 downto 48] | Nth 16-bit FL sample, I value |
|---|---|
| Q sample_N [47 downto 32] | Nth 16-bit FL sample, Q value |
| I Sample_N+1 [31 downto 16] | Nth+1 16-bit FL sample, I value |
| Q sample_N+1 [15 downto 0] | Nth+1 16-bit FL sample, Q value |

Table 5

| CSM RF interface BASE address | Programmable |
|---|---|
| RL timestamp memory address antenna 0:<br>RL data memory address antenna 0: | REF base address + 0x00000<br>RF base address + 0x02000 |
| FL timestamp memory address antenna 0:<br>FL data memory address antenna 0: | RF base address + 0x04000<br>RF base address + 0x06000 |
| RL timestamp memory address antenna 1:<br>RLP data memory address antenna 1: | RF base address + 0x03000<br>RF base address + 0x0A000 |
| FL timestamp memory address antenna 1:<br>FL data memory address antenna 1: | RF base address + 0x0C000<br>RF base address + 0x0E000 |
| RL timestamp memory address antenna 2:<br>RL data memory address antenna 2: | RF base address + 0x1 0000<br>RF base address + 0x1 2000 |
| FL timestamp memory address antenna 2:<br>FL data memory address antenna 2: | RF base address + 0x14000<br>RF base address + 0x1 6000 |
| RL timestamp memory address antenna 3:<br>RL data memory address antenna 3: | RF base address + 0x1 8000<br>RF base address + 0x1A000 |
| FL timestamp memory address antenna 3:<br>FL data memory address antenna 3: | RF base address + 0x1C000<br>RF base address + 0x1 E000 |

In one aspect the RF control interface provides real time control for the receiver gain and for transmit and receive gating for TDD mode. The control interface is called real-time since it provides a mechanism for synchronizing

10

commands with the data. In one aspect, the real-time control interface is not intended for static configuration, such as synthesizer and filtering settings or transmit power control. In one aspect, the real-time interface is also not intended for alarms, which must be processed elsewhere. Both the gain and gating control are performed by SWRITE operations to the memory addresses shown in Table 6. Table 7 illustrates an example format for the gain control stream.

Table 6

| CSM RF interface BASE address | Programmable |
|---|---|
| Rx gain control antenna 0:<br>Rx gating control address antenna 0:<br>Tx gating control address antenna 0: | RF base address + 0x20000<br>RF base address + 0x22000<br>RF base address + 0x24000 |
| Rx gain control antenna 1:<br>Rx gating control address antenna 1:<br>Tx gating control address antenna 1: | RF base address + 0x25000<br>RF base address + 0x28000<br>RF base address + 0x2A000 |
| Rx gain control antenna 2:<br>Rx gating control address antennas 2:<br>Tx gating control address antenna 2: | RF base address + 0x2C000<br>RF base address + 0x2E000<br>RF base address + 0x30000 |
| Rx gain control Antenna 3:<br>Rx gating control address antenna 3:<br>Tx gating control address antenna 3: | RF base address + 0x32000<br>RF base address + 0x34000<br>RF base address + 0x35000 |

Table 7

| Field [Bits] | Description |
|---|---|
| Timestamp [53 downto 32] | Timestamp on which the gain change is to take effect. |
| rxGain [31 downto 16] | Rx gain value in 0.5-dB steps |
| Reserved [15 downto 0] | Reserved |

The timestamp field reflects the desired time at which the gain change is to take effect. In one example, the actual time at which the RFFE changes the gain (based on a gain information rxGain) is within +/- 2 $\mu$s of the desired time. If the most significant bit (MSB) of the timestamp is set, the RFFE implements the gain change as soon as possible. The CSM submits gain changes within at least 100 $\mu$s of the desired time. If a gain control command is submitted before a previous gain control command has taken effect, the RFFE may ignore the previous command. Consequently, no buffering is required for the gain control commands. At the desired time, the RFFE adjusts its total receive gain so that input and output power are related by:

$$\mathrm{rxGain} = \mathrm{round}(\,(\mathrm{Pout} - \mathrm{Pin}\,)* 2) \qquad\qquad (1)$$

where Pin is the RFFE's estimate of the receive power at the antenna port in dBm, and Pout is given by:

$$\mathrm{Pout} = 10 \log (\sigma^2) \qquad\qquad (2)$$

and $\sigma^2$ is the mean squared digital value of the IQ samples. Therefore, rxGain represents the desired gain, in 0.5 dB steps, between the antenna and the digital RFFE output to the CSM. In one aspect, the calibration is done with an additive white Gaussian noise (AWGN) signal whose bandwidth covers the system input bandwidth. This ensures that the gain reflects the average gain over the passband. Since the input power is measured at the antenna port and not at the RFFE input, the RFFE must account for all external gains in the LNA and cable losses.

If the RFFE implements the gain in multiple stages, then it is up to the RFFE to decide the gain decomposition. Moreover, the RFFE may implement various automatic gain controls (AGCs) internally. For example, an AGC may operate on some RF gain stage prior to filtering to prevent overloading due to out-of-channel interference. However, in one aspect, if the RFFE changes the gain in one stage, it attempts to keep the total gain from the antenna to the CSM constant. If the RFFE cannot maintain a constant gain, it reports the condition and any other relevant information to the CSM.

In one example, for error tolerances, the RFFE matches the average gain with a relative accuracy of +/- 0.5 dB between different gain settings. The error tolerance refers to the average gain across the passband. This interface does not stipulate any absolute accuracy of the rxGain value. Other parameters, for example, such as the nominal absolute gain value and range of valid gain settings, are not specified in this interface either, and would need to be communicated to the CSM via some other static configuration. In another aspect, the format for the Tx and Rx gating commands are shown in Table 8 and Table 9, respectively.

Table 8

| Field [Bits] | Description |
|---|---|
| Timestamp [63 downto 32] | Timestamp on which the command is to take effect. |
| txEnable [31] | Flag indicating if the Tx path is to be enabled. |
| Reserved [30 downto 0] | Reserved |

Table 9

| Field [Bits] | Description |
|---|---|
| Timestamp [63 downto 32] | Timestamp on which the command is to take effect. |
| rxEnable [31] | Flag indicating if the Rx path is to be enabled. |
| Reserved [30 downto 0] | Reserved |

As with the Rx gain control command, the timestamp field reflects the desired time at which the command is to take effect. In one example, the actual time at which the RFFE implements the command is within +/- 1 μs of the desired time. If the most significant bit (MSB) of the timestamp is set, the RFFE implements the command as soon as possible. In one example, the CSM submits commands within at least 100 μs, and at most 10 ms, of the desired time. Also, the timestamps on any two Rx gating control commands correspond to times separated by at least 100 μs. Therefore, since the commands can be submitted at most 10 ms in advance, the RFFE needs to buffer, at most, 100 commands.

In the Tx gating command, a value of "1" on the txEnable bit indicates that the Tx is enabled. That is, data corresponding to samples after the desired time stamp is transmitted from the antenna. Conversely, a value of "0" indicates that the samples is not transmitted. If the Tx path is implemented in multiple stages, the order and timing of control of those stages is established. Similarly, in the Rx gating command, the rxEnable bit is set or not set to enable or disable the Rx path. If the Rx path is implemented in multiple stages, the order and timing of control of those stages is established. The timestamp and data packets are sent independently of whether the Tx or Rx data path is enabled.

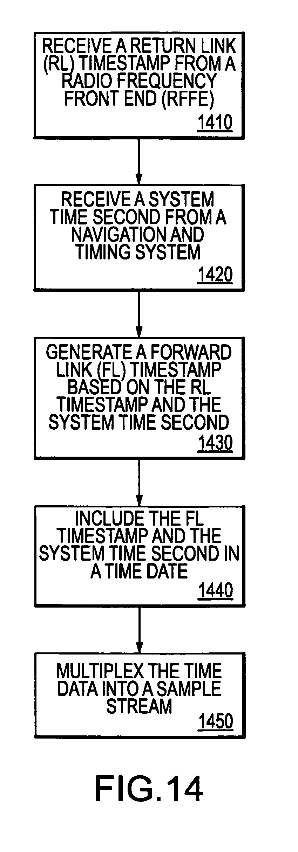

Figure 14 illustrates an example flow diagram for sample synchronization. In block 1410, receive a return (a.k.a. reverse) link (RL) timestamp from a radio frequency front end (RFFE). In block 1420, receive system time second from a navigation and timing system. In one example, the navigation and timing system is one of Global Navigation Satellite System (GNSS), Global Positioning System (GPS), Russian GLONASS (Global Navigation Satellite System), The European Union's Galileo positioning system, The Indian Regional Navigational Satellite System (IRNSS), China's Beidou Satellite Navigation and Positioning System, etc. Although the step in block 1410 is shown to happen before the step in block 1420, one skilled in the art would understand that the steps in block 1410 and block 1420 can be interchanged in time order or can happen simultaneously without affecting the scope of the present disclosure.

Following block 1420, in block 1430, generate a forward link (FL) timestamp based on the RL timestamp and the system time second. In one aspect, a FL timestamp is adjusted based on the RL timestamp and the system time second. Following block 1430, in block 1440, include the FL timestamp and the system time second in a time data. Following block 1440, in block 1450, multiplex the time data into a sample stream. In one aspect, the entity receiving the RL timestamp and the system time second is a cell site modem (CSM). In one example, the CSM is part of the access point block diagram illustrated in Figure 12.

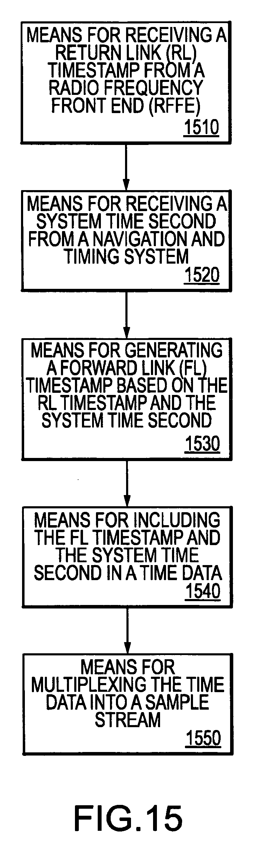

Figure 15 illustrates an example of a device 1500 suitable for sample synchronization. In one aspect, the device 1500 is implemented by at least one processor comprising one or more modules configured to provide different aspects of sample synchronization as described herein in blocks 1510, 1520, 1530, 1540 and 1550. For example, each module comprises hardware, firmware, software, or any combination thereof. In one aspect, the device 1500 is also implemented by at least one memory in communication with the at least one processor.

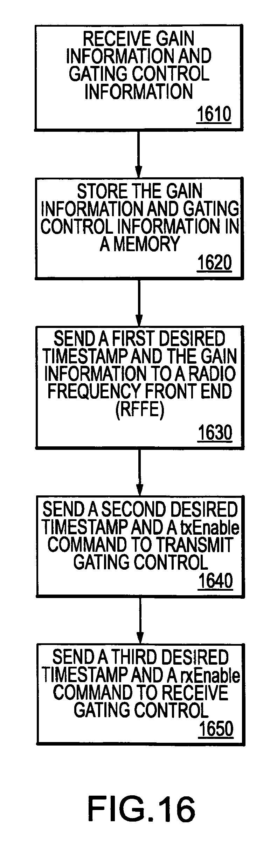

Figure 16 illustrates an example flow diagram for RF control. In block 1610, receive gain information and gating control information. In block 1620, store the gain information and gating control information in a memory. In one aspect, the parameters shown in Table 6 are used in the step of block 1620. Following block 1620, in block 1630, send a first desired timestamp and the gain information to a radio frequency front end (RFFE). In one aspect, the first desired timestamp reflects the desired time at which the gain change is to take effect. In one example, the parameters shown in Table 7 are used in the step of block 1630. In one aspect, the gain is used by the RFFE to adjust its gain setting.

Following block 1630, in block 1640, send a second desired timestamp and a txEnable command to a transmit gating control. The second desired timestamp reflects the desired time at which the txEnable command is to take effect. When executed, the txEnable command enables the transmit (tx) path. In one example, the parameters shown in Table 8 are used in the step of block 1640. In one example, the transmit gating control is a component of the RFFE.

Following block 1640, in block 1650, send a third desired timestamp and a rxEnable command to a receive gating control. The third desired timestamp reflects the desired time at which the rxEnable command is to take effect. When executed, the rxEnable command enables the receive (rx) path. In one example, the parameters shown in Table 9 are used in the step of block 1650. In one example, the receive gating control is a component of the RFFE.

In one aspect, the entity executing the steps of the example flow diagram of Figure 16 is a cell site modem (CSM). In one example, the CSM is part of the access point block diagram illustrated in Figure 12. In one aspect, the first, second and third desired timestamp are each sent independently. Additionally, one skilled in the art would understand that although the example flow diagram in Figure 16 shows a sequential flow of the steps of block 1630, 1640 and 1650, one skilled in the art would understand that a different ordering sequence would be possible without affecting the scope of the present disclosure. Similarly, each of the first, second and third desired timestamps may be sent independently without the other two, and whether or not the transmit (tx) or receive (rx) path is enabled.

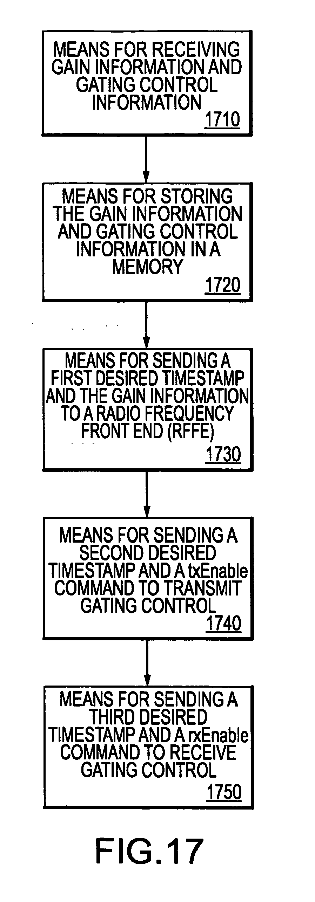

Figure 17 illustrates an example of a device 1700 suitable for RF control. In one aspect, the device 1700 is implemented by at least one processor comprising one or more modules configured to provide different aspects of RF control as described herein in blocks 1710, 1720, 1730, 1740 and 1750. For example, each module comprises hardware, firmware, software, or any combination thereon. In one aspect, the device 1700 is also implemented by at least one memory in communication with the at least one processor.

One skilled in the art would understand that the steps disclosed in the example flow diagrams in Figures 14 and 16 can be interchanged in their order without departing from the scope of the present disclosure. Also, one skilled in the art would understand that the steps illustrated in the flow diagrams are not exclusive and other steps may be included or one or more of the steps in the example flow diagram may be deleted without affecting the scope of the present disclosure.

Those of skill would further appreciate that the various illustrative components, logical blocks, modules, circuits, and/or algorithm steps described in connection with the examples disclosed herein may be implemented as electronic hardware, firmware, computer software, or combinations thereof. To clearly illustrate this interchangeability of hardware, firmware and software, various illustrative components, blocks, modules, circuits, and/or algorithm steps have been described above generally in terms of their functionality. Whether such functionality is implemented as hardware, firmware or software depends upon the particular application and design constraints imposed on the overall system. Skilled artisans may implement the described functionality in varying ways for each particular application, but such implementation decisions should not be interpreted as causing a departure from the scope of the present disclosure.

For example, for a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described therein, or a combination thereon. With software, the implementation may be through modules (e.g., procedures, functions, etc.) that performs the functions described therein. The software codes may be stored in memory units and executed by a processor unit. Additionally, the various illustrative flow diagrams, logical blocks, modules and/or algorithm steps described herein may also be coded as computer-readable instructions carried on any computer-readable medium known in the art or implemented in any computer program product known in the art.

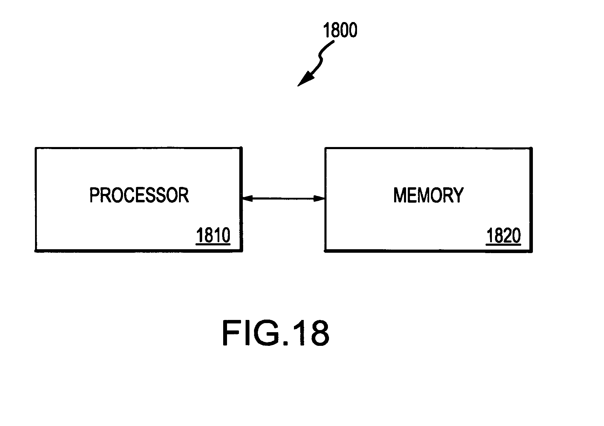

In one example, the illustrative components, flow diagrams, logical blocks, modules and/or algorithm steps described herein are implemented or performed with one or more processors. In one aspect, a processor is coupled with a memory which stores data, metadata, program instructions, etc. to be executed by the processor for implementing or performing the various flow diagrams, logical blocks and/or modules described herein. Figure 18 illustrates an example of a device 1800 comprising a processor 1810 in communication with a memory 1820. In one example, the device 1800 is used to implement the algorithm illustrated in Figure 14. In one example, the device 1800 is used to implement the algorithm illustrated in Figure 16. In one aspect, the memory 1820 is located within the processor 1810. In another aspect, the memory 1820 is external to the processor 1810. In one aspect, the processor includes circuitry for implementing or performing the various flow diagrams, logical blocks and/or modules described herein.

The previous description of the disclosed aspects is provided to enable any person skilled in the art to make or use the present disclosure. Various modifications to these aspects will be readily apparent to those skilled in the art, and the generic principles defined herein may be applied to other aspects without departing from the scope of the disclosure.

**Claims**

1.  A method for sample synchronization comprising:

    receiving (1410) a return link (RL) timestamp from a radio frequency front end (RFFE), said timestamp represent the time of a sample at the antenna of the RFFE;
    receiving (1420) a system time second from a navigation and timing system;
    generating (1430) a forward link (FL) timestamp based on the RL timestamp and the system time second; and
    including (1440) the FL timestamp and the system time second in a time data prior to multiplexing the time data into a sample stream that is to be sent.

2.  The method of claim 1 further comprising multiplexing (1450) the time data into said sample stream.

3.  The method of claim 2 further comprising sending the sample stream.

4.  The method of claim 1 wherein the navigation and timing system is a Global Positioning System (GPS), and wherein the method of claim 1 further comprising aligning the system time second to a GPS time of the Global Positioning System.

5.  The method of claim 1 further comprising aligning a timestamp counter to the system time second.

6.  The method of claim 2 wherein the FL timestamp further includes information of the current mode of operation represented by the sample stream.

7.  A device for sample synchronization comprising:

    means (1510) for receiving a return link (RL) timestamp from a radio frequency front end (RFFE), said timestamp represent the time of a sample at the antenna of the RFFE;
    means (1520) for receiving a system time second from a navigation and timing system;
    means (1530) for generating a forward link (FL) timestamp based on the RL timestamp and the system time second; and
    means (1540) for including the FL timestamp and the system time second in a time data prior to multiplexing the time data into a sample stream that is to be sent.

8.  The device of claim 7 further comprising means (1550) for multiplexing the time data into said sample stream.

9.  The device of claim 8 further comprising means for sending the sample stream.

10. The device of claim 7 wherein the navigation and timing system is a Global Positioning System (GPS).

11. The device of claim 10 further comprising means for aligning the system time second to a GPS time of the Global Positioning System.

12. The device of claim 7 further comprising means for aligning a timestamp counter to the system time second.

13. The device of claim 7 wherein the FL timestamp is written every 1024 samples for a 10 MHz bandwidth UMB frequency division duplex (FDD) mode.

14. The device of claim 8 wherein the FL timestamp further includes information of the current mode of operation represented by the sample stream.

15. A computer-readable medium including program code stored thereon, comprising:

program code for carrying out the steps of any of claims 1 to 6.

**Patentansprüche**

1. Ein Verfahren zur Sample- bzw. Abtastungssynchronisierung, das Folgendes aufweist:

   Empfangen (1410) eines Rückwärtsverbindungs- bzw. RL-Zeitstempels (RL = return link = Rückwärtsverbindung) von einem Funkfrequenz-Front-End (RFFE = radio frequency front end), wobei der Zeitstempel die Zeit einer Abtastung bzw. eines Samples an der Antenne des RFFE darstellt;
   Empfangen (1420) einer Systemzeitsekunde von einem Navigations- und Timing-System;
   Generieren (1430) eines Vorwärtsverbindungs- bzw. FL-Zeitstempels (FL = forward link = Vonivärtsverbindung) basierend auf dem RL-Zeitstempel und der Systemzeitsekunde; und
   Aufnehmen (1440) des FL-Zeitstempels und der Systemzeitsekunde in Zeitdaten vor dem Multiplexen der Zeitdaten in einen Sample-Strom, der gesendet werden soll.

2. Verfahren nach Anspruch 1, das weiter das Multiplexen (1450) der Zeitdaten in den Sample-Strom aufweist.

3. Verfahren nach Anspruch 2, das weiter das Senden des Sample-Stroms aufweist.

4. Verfahren nach Anspruch 1, wobei das Navigations- und Timing-System ein Global-Positioning-System (GPS) ist, und wobei das Verfahren nach Anspruch 1 weiter das Ausrichten der Systemzeitsekunde mit einer GPS-Zeit des Global-Positioning-Systems aufweist.

5. Verfahren nach Anspruch 1, das weiter das Ausrichten eines Zeitstempel-Zählers mit der Systemzeitsekunde aufweist.

6. Verfahren nach Anspruch 2, wobei der FL-Zeitstempel weiter Information des aktuellen Betriebsmodus, dargestellt durch den Sample-Strom, beinhaltet.

7. Eine Vorrichtung zur Sample- bzw. Abtastungssynchronisierung, die Folgendes aufweist:

   Mittel (1510) zum Empfangen eines Rückwärtsverbindungs- bzw. RL-Zeitstempels von einem Funkfrequenz-Front-End (RFFE), wobei der Zeitstempel die Zeit einer Abtastung bzw. eines Samples an der Antenne des RFFE darstellt;
   Mittel (1520) zum Empfangen einer Systemzeitsekunde von einem Navigations- und Timing-System;
   Mittel (1530) zum Generieren eines Vorwärtsverbindungs- bzw. FL-Zeitstempels basierend auf dem RL-Zeitstempel und der Systemzeitsekunde; und
   Mittel (1540) zum Aufnehmen des FL-Zeitstempels und der Systemzeitsekunde in Zeitdaten vor dem Multiplexen der Zeitdaten in einen Sample-Strom, der gesendet werden soll.

8. Vorrichtung nach Anspruch 7, die weiter Mittel (1550) zum Multiplexen der Zeitdaten in den Sample-Strom aufweist.

9. Vorrichtung nach Anspruch 8, die weiter Mittel zum Senden des Sample-Stroms aufweist.

10. Vorrichtung nach Anspruch 7, wobei das Navigations- und Timing-System ein Global-Positioning-System (GPS) ist.

11. Vorrichtung nach Anspruch 10, die weiter Mittel zum Ausrichten der Systemzeitsekunde mit einer GPS-Zeit des Global-Positioning-Systems aufweist.

12. Vorrichtung nach Anspruch 7, die weiter Mittel zum Ausrichten eines Zeitstempel-Zählers mit der Systemzeitsekunde aufweist.

13. Vorrichtung nach Anspruch 7, wobei der FL-Zeitstempel alle 1024 Abtastungen bzw. Samples für einen 10-MHz-Bandbreite-UMB-Frequenzduplex- bzw. -FDD-Modus (FDD = frequency division duplex) geschrieben wird.

14. Vorrichtung Anspruch 8, wobei der FL-Zeitstempel weiter Information über den aktuellen Betriebsmodus, dargestellt durch den Abtastungsstrom bzw. Sample-Strom, beinhaltet.

**15.** Ein computerlesbares Medium, das darauf gespeichert Programmcode beinhaltet, der Folgendes aufweist:

Programmcode zum Ausführen der Schritte nach einem der Ansprüche 1 bis 6.

**Revendications**

**1.** Procédé de synchronisation d'échantillons, comprenant les étapes suivantes :

recevoir (1410) un marqueur temporel de liaison de retour (RL) provenant d'un dispositif frontal radiofréquence (RFFE), le marqueur temporel représentant le temps d'un échantillon au niveau de l'antenne du RFFE ;
recevoir (1420) une seconde de temps système provenant d'un système de navigation et de synchronisation ;
générer ((1430) un marqueur temporel de liaison directe (FL) sur la base du marqueur temporel RL et de la seconde de temps système ; et
inclure (1440) le marqueur temporel FL et la seconde de temps système dans une donnée temporelle avant de multiplexer la donnée temporelle dans un flux d'échantillons qui doit être envoyé.

**2.** Procédé selon la revendication 1, comprenant en outre le multiplexage (1450) de la donnée temporelle dans le flux d'échantillons.

**3.** Procédé selon la revendication 2, comprenant en outre l'envoi du flux d'échantillons.

**4.** Procédé selon la revendication 1, dans lequel le système de navigation et de synchronisation est un Système de Positionnement Global (GPS), et dans lequel le procédé de la revendication 1 comprend en outre l'alignement de la seconde de temps système sur un temps GPS du Système de Positionnement Global.

**5.** Procédé selon la revendication 1, comprenant en outre l'alignement d'un compteur de marqueurs temporels sur la seconde de temps système.

**6.** Procédé selon la revendication 2, dans lequel le marqueur temporel FL comprend en outre des informations sur le mode de fonctionnement courant représenté par le flux d'échantillons.

**7.** Dispositif destiné à une synchronisation d'échantillons, comprenant :

des moyens (1510) pour recevoir un marqueur temporel de liaison de retour (RL) provenant d'un dispositif frontal radiofréquence (RFFE), le marqueur temporel représentant le temps d'un échantillon au niveau de l'antenne du RFFE ;
des moyens (1520) pour recevoir une seconde de temps système provenant d'un système de navigation et de synchronisation ;
des moyens (1530) pour générer un marqueur temporel de liaison directe (FL) sur la base du marqueur temporel RL et de la seconde de temps système ; et
des moyens (1540) pour inclure le marqueur temporel FL et la seconde de temps système dans une donnée temporelle avant de multiplexer la donnée temporelle dans un flux d'échantillons qui doit être envoyé.

**8.** Dispositif selon la revendication 7, comprenant en outre des moyens (1550) pour multiplexer la donnée temporelle dans le flux d'échantillons.

**9.** Dispositif selon la revendication 8, comprenant en outre des moyens pour envoyer le flux d'échantillons.

**10.** Dispositif selon la revendication 7, dans lequel le système de navigation et de synchronisation est un Système de Positionnement Global (GPS).

**11.** Dispositif selon la revendication 10, comprenant en outre des moyens pour aligner la seconde de temps système sur un temps GPS du Système de Positionnement Global.

**12.** Dispositif selon la revendication 7, comprenant en outre des moyens pour aligner un compteur de marqueurs temporels sur la seconde de temps système.

**13.** Dispositif selon la revendication 7 dans lequel le marqueur temporel FL est écrit tous les 1024 échantillons pour un mode de duplexage par séparation fréquentielle (FDD) UMB de 10 MHz de largeur de bande.

**14.** Dispositif selon la revendication 8 dans lequel le marqueur temporel FL comprend en outre des informations sur le mode de fonctionnement courant représenté par le flux d'échantillons.

**15.** Support lisible par un ordinateur comprenant du code de programme mémorisé sur lui, comprenant :

du code de programme pour exécuter les étapes de l'une quelconque des revendications 1 à 6.

FIG.1

FIG.2

EP 2 235 989 B1

FIG.3

19

FIG.4

L2/3 CONTROL PLANE    L2/L3 DATA PLANE    PHY (1 SECTOR)

BACKHAUL
GIG E

ETHERNET
SWITCH

GIG E
DATA

L3M

DATA
GIG E

L2M

MAC
PACKETS
SRIO

SRIO
SWITCH

FMM

FMM

FMM

RFFE

CTRL
GIG E

CTRL
GIG E

CPM

CTRL
GIG E

MANAGEMENT
SRIO

IQ SAMPLES
SRIO

UMB API                    CSM API

FIG.5

L2/3 CONTROL PLANE    L2/L3 DATA PLANE    PHY (3 SECTORS)

BACKHAUL
GIG E

ETHERNET
SWITCH

GIG E
DATA

L3M

DATA
GIG E

L2M

MAC
PACKETS
SRIO

SRIO
SWITCH

CMM

CMM

CMM

RFFE

GIG E
CTRL

CTRL
GIG E

CPM

CTRL
GIG E

MANAGEMENT
SRIO

3X
IQ SAMPLES
SRIO

UMB API                    CSM API

FIG.6

EP 2 235 989 B1

**FIG.7**

| 0 | | | | | | | | | | 1 | | | | | | | | | | 2 | | | | | | | | | | 3 | |
|---|---|---|---|---|---|---|---|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 | 0 | 1 |

| VER | RSRVD | LENGTH | MESSAGE TYPE |
|-----|-------|--------|--------------|

**FIG.8**

FL
RL

MAC                    CSM        MAC                    CSM

                                  ←─── FLAckRLAsgReq (n) ───

──── FLCSDesc (n-1) ────→                                        ↑
──── FLMACPacketDesc ───→                                        │
──── FLMACPacketDesc ───→                                        │
                                                                 <11 SYM
                                                                 │
←─── RLAckFLAsgReq (n) ───                                       │
                                  ←── FLAckRLAsgReq (n+1) ──      │
     ↑                                                           │
  <5 SYM  ──── FLCSDesc (n) ────→  ──── FLCSDesc (n) ────→       ↓
     │   ──── FLMACPacketDesc ───→  ────── RLAsg(n) ──────→
     ↓   ──── FLMACPacketDesc ───→


←── RLAckFLAsgReq (n+1) ──

# FIG.9


MAC                                                  CSM

────────── NWRITE_R (FL PACKET DATE) ──────────→
←───────────── NWRITE_RESPONSE ─────────────────

────────── CryotoMaskGen (MESSAGE) ────────────→
←────────── CryotoMaskDone (DOORBELL) ──────────

# FIG.10

MAC                                                     CSM

RDCHMacHdr

DecryotReq

NWRITE (DECRYPTED SAR PAYLOAD)

●
●
●

NWRITE (DECRYPTED SAR PAYLOAD)
DecryptDone (DOORBELL)

# FIG.11

FIG.12

EP 2 235 989 B1

EP 2 235 989 B1

Rx

$TS_{rl} = 0$

$TS_{rl} = 0$
$t = 40\ \mu s$

10 μs → ADC → 30 μs

t = 0 μs

t = 10 μs

Tx

CSM8900

← PROGRAMMABLE
ADVANCE (ADV)

10 μs + 30 μs + 30 μs + 5 μs = 75 μs

5 μs ← DAC ← 30 μs

t = 75 μs

t = 70 μs
$TS_{fl} = 75$

$TS_{fl} = TS + ADV$
$TS_{fl} = 0 + 75$

# FIG.13

RECEIVE A RETURN LINK
(RL) TIMESTAMP FROM A
RADIO FREQUENCY
FRONT END (RFFE)
1410

RECEIVE A SYSTEM
TIME SECOND FROM A
NAVIGATION AND
TIMING SYSTEM
1420

GENERATE A FORWARD
LINK (FL) TIMESTAMP
BASED ON THE RL
TIMESTAMP AND THE
SYSTEM TIME SECOND
1430

INCLUDE THE FL
TIMESTAMP AND THE
SYSTEM TIME SECOND IN
A TIME DATE
1440

MULTIPLEX THE TIME
DATA INTO A SAMPLE
STREAM
1450

FIG.14

MEANS FOR RECEIVING A RETURN LINK (RL) TIMESTAMP FROM A RADIO FREQUENCY FRONT END (RFFE)
1510

MEANS FOR RECEIVING A SYSTEM TIME SECOND FROM A NAVIGATION AND TIMING SYSTEM
1520

MEANS FOR GENERATING A FORWARD LINK (FL) TIMESTAMP BASED ON THE RL TIMESTAMP AND THE SYSTEM TIME SECOND
1530

MEANS FOR INCLUDING THE FL TIMESTAMP AND THE SYSTEM TIME SECOND IN A TIME DATA
1540

MEANS FOR MULTIPLEXING THE TIME DATA INTO A SAMPLE STREAM
1550

FIG.15

```
┌─────────────────────────┐
│     RECEIVE GAIN        │
│   INFORMATION AND       │
│   GATING CONTROL        │
│     INFORMATION         │
│            1610         │
└─────────────────────────┘
            │
            ▼
┌─────────────────────────┐
│    STORE THE GAIN       │
│ INFORMATION AND GATING  │
│ CONTROL INFORMATION IN  │
│      A MEMORY           │
│            1620         │
└─────────────────────────┘
            │
            ▼
┌─────────────────────────┐
│  SEND A FIRST DESIRED   │
│ TIMESTAMP AND THE GAIN  │
│ INFORMATION TO A RADIO  │
│  FREQUENCY FRONT END    │
│         (RFFE)          │
│            1630         │
└─────────────────────────┘
            │
            ▼
┌─────────────────────────┐
│ SEND A SECOND DESIRED   │
│ TIMESTAMP AND A txEnable │
│ COMMAND TO TRANSMIT     │
│    GATING CONTROL       │
│            1640         │
└─────────────────────────┘
            │
            ▼
┌─────────────────────────┐
│  SEND A THIRD DESIRED   │
│ TIMESTAMP AND A rxEnable │
│  COMMAND TO RECEIVE     │
│    GATING CONTROL       │
│            1650         │
└─────────────────────────┘
```

# FIG.16

```
┌─────────────────────────────┐
│     MEANS FOR RECEIVING      │
│   GAIN INFORMATION AND       │
│     GATING CONTROL           │
│       INFORMATION            │
│                    1710      │
└─────────────────────────────┘
              │
              ▼
┌─────────────────────────────┐
│     MEANS FOR STORING        │
│  THE GAIN INFORMATION        │
│   AND GATING CONTROL         │
│    INFORMATION IN A          │
│         MEMORY               │
│                    1720      │
└─────────────────────────────┘
              │
              ▼
┌─────────────────────────────┐
│    MEANS FOR SENDING A       │
│  FIRST DESIRED TIMESTAMP     │
│ AND THE GAIN INFORMATION     │
│   TO A RADIO FREQUENCY       │
│      FRONT END (RFFE)        │
│                    1730      │
└─────────────────────────────┘
              │
              ▼
┌─────────────────────────────┐
│    MEANS FOR SENDING A       │
│      SECOND DESIRED          │
│  TIMESTAMP AND A txEnable    │
│  COMMAND TO TRANSMIT         │
│     GATING CONTROL           │
│                    1740      │
└─────────────────────────────┘
              │
              ▼
┌─────────────────────────────┐
│    MEANS FOR SENDING A       │
│       THIRD DESIRED          │
│  TIMESTAMP AND A rxEnable    │
│  COMMAND TO RECEIVE          │
│     GATING CONTROL           │
│                    1750      │
└─────────────────────────────┘
```

# FIG.17

1800

| PROCESSOR | | MEMORY |
| 1810 | | 1820 |

# FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2321151 A